# EUROPÄISCHE PATENTSCHRIFT

(11) **EP 3 999 310 B1**
(45) Veröffentlichungstag und Bekanntmachung des Hinweises auf die Patenterteilung: **11.09.2024**
(21) Anmeldenummer: 20711780.5
(22) Anmeldetag: 20.02.2020
(51) Int. Cl.: B29C 51/46, B29C 51/08, B29L 31/00

(54) **THERMOFORMWERKZEUG, THERMOFORMSTATION, ANLAGE ZUM HERSTELLEN EINES THERMOGEFORMTEN FORMTEILS UND VERFAHREN ZUM HERSTELLEN EINES THERMOGEFORMTEN FORMTEILS**
THERMOFORMING TOOL, THERMOFORMING STATION, SYSTEM FOR PRODUCING A THERMOFORMED MOLDING PART AND METHOD FOR PRODUCING A THERMOFORMED MOLDING PART
OUTIL DE THERMOFORMAGE, POSTE DE THERMOFORMAGE, INSTALLATION DE PRODUCTION D'UNE PIÈCE MOULÉE THERMOFORMÉE ET PROCÉDÉ DE PRODUCTION D'UNE PIÈCE MOULÉE THERMOFORMÉE

(30) Priorität: 18.07.2019 DE 102019004970
(43) Veröffentlichungstag der Anmeldung: 25.05.2022
(73) Patentinhaber: Kiefel GmbH, 83395 Freilassing (DE)
(72) Erfinder: FEIL, Jürgen, 83410 Laufen (DE)
(74) Vertreter: DTS Patent- und Rechtsanwälte PartmbB
(86) Internationale Anmeldenummer: PCT/DE2020/100123
(87) Internationale Veröffentlichungsnummer: WO 2021/008643

(56) Entgegenhaltungen:
- WO-A1-2018/138650
- DE-A1- 10 349 156
- DE-A1- 102008 005 625
- US-A- 4 832 885
- US-A1- 2011 003 025

## Beschreibung

Die Erfindung betrifft ein Thermoformwerkzeug zum Thermoformen einer Folie aus einem thermoplastischen Material zu einem Formteil, insbesondere zu einem Formteil eines Kühlschranks, mit einem oberen Werkzeugteil, mit einem unteren Werkzeugteil und mit einer Halteeinrichtung zum Halten der Folie zwischen den beiden Werkzeugteilen.

Die Erfindung betrifft ferner eine Thermoformstation zum Herstellen eines thermogeformten Formteils aus einer Folie mit einem Thermoformwerkzeug zum Thermoformen der Folie und mit einer Zuführstrecke zum Zuführen des Thermoformwerkzeugs.

Die Erfindung betrifft ebenso eine Anlage zum Herstellen eines thermogeformten Formteils aus einer Folie.

Die Erfindung betrifft darüber hinaus ein Verfahren zum Herstellen eines thermogeformten Formteils, insbesondere eines thermogeformten Formteils für einen Kühlschrank, aus einer Folie aus einem thermoplastischen Material, bei welchem die Folie mit einer Halteeinrichtung an einem Thermoformwerkzeug gehalten wird, während die Folie mittels des Thermoformwerkzeugs zu dem thermogeformten Formteil umgeformt wird.

Es ist aus dem Stand der Technik bekannt, thermoplastisch verformbare Folien mittels geeigneter Thermoformwerkzeuge zu Formteilen umzuformen, auch zu größeren Formteilen, wie insbesondere Kühlschrankeinsätzen oder dergleichen.

So ist beispielsweise aus der WO 2014/ 187446 A2 ein Thermoformwerkzeug zum Formen eines Formteils aus thermoplastischem Kunststoff bekannt, wobei das thermoplastische Material als Folienbahn und insbesondere als Kunststoffplatte bereitgestellt wird. Das Formteil kann dabei als ein Thermoformprodukt in Gestalt eines Halbzeugs für einen Kühlschrank vorliegen.

Eine vergleichbare Vorrichtung ist aus der US 4 832 885 A bekannt. Zur Verbesserung der Überwachung des verformten Material schlägt die DE 10 2008 006 25 A1 vor, das innere Streckwerkzeug mit einer Mehrzahl von Sensoren auszurüsten und auf diese Weise die Wanddicke des Formteils zu bestimmen. Weiterhin wird für den Bereich der Dentaltechnik in der WO 2018/138650 A1 vorgeschlagen, nach einer optischen Vermessung des positiven Streckwerkzeuges, ein 3D-Modell anzufertigen und hieraus die Materialstärke des Formteils abzuleiten. Die US 2011/0003025 A1 schlägt ebenfalls für den Dentaltechnikbereich vor, mit einer oberhalb des Formwerkzeuges angeordneten Sensoreinheit, insbesondere einem optischen Sensor, die Materialdickes des Formteils zu bestimmen. Schließlich offenbart die DE 103 49 156 A1, mittels eines Laserstrahls auf den Formprozess Einfluss zu nehmen und auch mittels Laserstrahlen die Dicken- und/oder Temperaturmessung des Formteil während des Umformens vorzunehmen.

US4832885A und US2011003025A1 offenbaren Thermoformwerkzeuge nach dem Oberbegriff des Anspruchs 1.

Der Erfindung liegt die Aufgabe zugrunde, bisher bekannte Thermoformmöglichkeiten weiterzuentwickeln. Insbesondere liegt der Erfindung die Aufgabe zugrunde, gattungsgemäße Thermoformwerkzeuge und Thermoformverfahren dahingehend weiterzuentwickeln, die Herstellung von thermogeformten Formteilen effektiver zu gestalten.

Die Aufgabe der Erfindung wird mit den Merkmalen der unabhängigen Ansprüchen gelöst.

Es wird immer häufiger gewünscht, Thermoformteile zunehmend dünnwandiger auszuführen, wie im Speziellen auch Kühlschrankinnenteile oder dergleichen. Hierbei darf eine kritische Wandstärke jedoch nicht unterschritten werden, um trotz optimaler Materialeinsparung ein Mindestmaß an Formstabilität, Haltbarkeit usw. des Formteils gewährleisten zu können. Speziell bei später noch zu hinterschäumenden Formteilen ist darauf zu achten, dass die Wandstärke stets derart gewählt ist, dass die Gefahr ausgeschlossen ist, dass eine Schaumlage sich beim Anschäumen unbeabsichtigt durch die Formteilwandung hindurchdrückt. Ein derartiger Anwendungsfall existiert beispielsweise praktisch bei Kühlschrankinnenteilen.

Ist an dem Thermoformwerkzeug eine Messeinrichtung vorgesehen, mittels welcher an der bereits thermogeformten Folie eine oder mehrere Wandstärken gemessen werden können, kann bereits unmittelbar nach dem Formungsprozess eine erste Qualitätskontrolle dahingehend durchgeführt werden, ob das gerade erzeugte Formteil den qualitativen Ansprüchen eines Kunden genügt oder nicht.

Mit anderen Worten: Es kann unmittelbar nach dem Thermoformen der Folie noch an bzw. in dem Thermoformwerkzeug detektiert werden, ob es sich bei dem soeben erzeugten Formteil, sei es als Halbzeug oder als Endprodukt, um ein Gutteil oder ein Schlechtteil handelt.

Bei einem Schlechtteil ist eine Mindestdicke einer Wandstärke zumindest an einer Stelle des Formteils erreicht bzw. unterschritten.

Hierbei befindet sich das thermogeformte Formteil noch in dem Thermoformwerkzeug angeordnet, so dass die Qualität des letztendlich bereits thermogeformten Produkts (Halbzeug oder Endprodukt) wesentlich frühzeitiger ermittelt werden kann als bisher möglich.

Besonders vorteilhaft ist es hierbei auch, dass das soeben geformte Formteil für die im Sinne der Erfindung vorgesehene Dickenmessung immer noch definiert an dem Thermoformwerkzeug aufgespannt ist, wodurch eine Dickenmessung besonders schnell und präzise an dem Thermoformwerkzeug erfolgen kann. Das bedeutet, dass Funktionen von Qualitätsprüfungen äußerst präzise in das vorliegende Thermoformwerkzeug integriert werden können.

Das Thermoformwerkzeug kann hierbei unterschiedlichst ausgestaltet sein, solange es für einen Thermoformprozess einer Folie eingesetzt werden kann, um ein entsprechend qualitativ hochwertiges thermogeformtes Form- bzw. Bauteil zu erzeugen.

Das Thermoformwerkzeug weist zumindest zwei Werkzeugteile auf, welche aufeinander zu bewegbar angeordnet sind, um das Thermoformwerkzeug schließen zu können. Hierzu ist zumindest eines der Werkzeugteile gegenüber dem anderen Werkzeugteil verlagerbar angeordnet.

In der Regel werden Folien dem Thermoformwerkzeug entlang einer Zuführstrecke zugestellt, wobei die Zuführstrecke sich bis zwischen den beiden Werkzeugteilen erstreckt.

Bevorzugt umfasst das obere Werkzeugteil als erstes Werkzeugteil ein Saug-Druck-Glockenteil, mittels welchem die Folie zum Formen bedarfsweise zusätzlich mittels Überdruck bzw. Pressluft gegen eine Form des Thermoformwerkzeugs gepresst werden kann.

Mittels eines derartigen Saug-Druck-Glockenteils kann die Folie insbesondere vor der eigentlichen Folien-Druckverformung mithilfe einer zusätzlichen Saugwirkung auch in das Saug-Druck-Glockenteil erst hineingesogen werden, um die Folie hierbei vorformen zu können.

Das untere Werkzeugteil als komplementäres zweites Werkzeugteil umfasst bevorzugt ein Patrizenteil, über welches die Folie während des Thermoformens "übergestülpt" wird, um die Folie zu dem gewünschten Formteil umformen zu können.

Vorliegend spielt eine gewählte Orientierung der einzelnen Werkzeugteile innerhalb des Thermoformwerkzeugs, wenn überhaupt, nur eine untergeordnete Rolle. Insofern kann auch das untere Werkzeugteil das Saug-Druck-Glockenteil und das obere Werkzeugteil das Patrizenteil umfassen.

Darüber hinaus beschreibt die Begrifflichkeit "Halteeinrichtung" im Sinne der Erfindung eine Einrichtung, mittels welcher die Folie betriebssicher zwischen den Werkzeugteilen des Thermoformwerkzeugs gehaltert wird. Erfindungsgemäß kann diese Halteeinrichtung realisiert sein als Spannrahmenteil sowie kumulativ oder alternativ können zum Haltern der Folie auch eine Vielzahl an Einzelgreifern vorgesehen sein.

Weiterhin ist an der Halteeinrichtung die Messeinrichtung angeordnet. Aber auch sonstige Tragegestelle oder Brückengestelle können zur Aufnahme der Messeinrichtung vorgesehen sein.

Der Begriff "Folie" beschreibt folienartige Halbzeuge, welche sowohl als dünne Folien als auch als dickere Platten mit Dicken ab 1,5 mm oder mehr vorliegen können. Vorliegend werden bevorzugt Platten thermogeformt, um beispielsweise Kühlschrankinnenteile usw. herzustellen.

Insbesondere bei größeren Formteilen, wie dies beispielweise Kühlschrankinnenteile usw. darstellen, können sehr großen Umformkräfte von beispielsweise 800 kN oder mehr auftreten.

Der Begriff "Formteil" beschreibt vorliegend ein bevorzugt dreidimensionales Bauteil, welches aus der zuvor im Wesentlichen zweidimensionalen Folien bzw. Platte thermogeformt ist. Das Formteil kann hierbei als Halbzeug, wie etwa als noch zu hinterschäumende Kühlschrankinnenteilschale, oder auch bereits als fertiges Endprodukt vorliegen.

Es sei auch noch darauf hingewiesen, dass im Rahmen der hier vorliegenden Patentanmeldung unbestimmte Artikel und unbestimmte Zahlenangaben wie "ein...", "zwei..." usw. im Regelfall als mindestens-Angaben zu verstehen sein sollen, also als "mindestens ein.. ", "mindestens zwei... " usw., sofern sich nicht etwa aus dem Kontext oder dem konkreten Text einer bestimmten Stelle ergibt, dass etwa dort nur "genau ein...", "genau zwei..." usw. gemeint sein soll.

An dieser Stelle sei noch erwähnt, dass im Rahmen der hier vorliegenden Patentanmeldung der Ausdruck "insbesondere" immer so zu verstehen sei, dass mit diesem Ausdruck ein optionales, bevorzugtes Merkmal eingeleitet wird. Der Ausdruck ist nicht als "und zwar" und nicht als "nämlich" zu verstehen.

Eine bevorzugte Ausführungsvariante sieht vor, dass die Messeinrichtung Messsensorteile, insbesondere mechanische Messsensorteile, optische Messsensorteile, akustische Messsensorteile und/oder dergleichen, umfasst. Vorteilhafterweise kann die Messeinrichtung derart konzipiert werden, dass sie unterschiedlichste Messmethoden einzeln oder in Kombination aufweisen kann, von welchen hier nur einige beispielhaft genannt sind.

Insbesondere bei derartigen Messsensorteilen handelt es sich im Sinne der Erfindung auch um einzelne Komponenten der Messeinrichtung. Ferner können weitere Komponenten etwa Auswerteeinheiten, wie beispielsweise computergestützte Recheneinheiten, Antriebseinheiten oder dergleichen umfassen.

Beispielsweise können mechanisch arbeitende Messsensorteile vorgesehen sein, wobei mechanische Messsensorteile sehr robust bauen und damit sehr wartungsarm sind.

Kumulativ oder alternativ können etwa auch optisch arbeitende Messsensorteile vorgesehen werden, welche vorteilhafterweise berührungslos arbeiten können.

Ebenfalls kumulativ oder alternativ können auch akustisch arbeitende Messsensorteile berücksichtigt sein, welche ebenfalls berührungslos arbeiten können.

Vorteilhafterweise können optisch und akustisch arbeitende Messsensorteile auch weiter entfernt von den Werkzeugteilen des Thermoformwerkzeugs angeordnet sein. Beispielsweise können derartige Messsensorteile hierdurch gefahrenfreier gewartet bzw. gereinigt werden.

Baulich kann die Messeinrichtung unterschiedlich an dem Thermoformwerkzeug gehaltert sein. Beispielsweise ist die Messeinrichtung oder zumindest einzelne Komponenten hiervon an der Halteeinrichtung angeordnet. Hierdurch kann die Messeinrichtung sehr kompakt an dem Thermoformwerkzeug gehaltert werden.

Ferner kann die Messeinrichtung vorteilhafterweise mithilfe der Halteeinrichtung insbesondere gegenüber dem unteren Werkzeugteil bzw. dem geformten Formteil räumlich verlagert werden, wenn die Halteeinrichtung verfahrbar an dem Thermoformwerkzeug realisiert ist, etwa an einem Spannrahmen zum Aufspannen der Folie oder dergleichen.

Es versteht sich, dass die Messeinrichtung auch auf andere Weise an dem Thermoformwerkzeug befestigt sein kann. Beispielsweise kann die Messeinrichtung an einem der Werkzeugteile des Thermoformwerkzeugs angeordnet sein.

Oder es ist ein separates Tragegestell an dem Thermoformwerkzeug zum Tragen der Messeinrichtung vorgesehen, wodurch sich jedoch der bauliche Aufwand erhöht.

Darüber hinaus ist es vorteilhaft, wenn die Messeinrichtung oder zumindest einzelne Komponenten hiervon außen vor dem unteren Werkzeugteil, insbesondere seitlich neben dem unteren Werkzeugteil, angeordnet ist, so dass die Messeinrichtung sowohl die Position der Außenseite seitlich des unteren Werkzeugteils als auch anschließend die deckungsgleiche Position der Formteilaußenseite detektieren kann.

Besonders vorteilhaft ist es, wenn die Messeinrichtung oder zumindest einzelne Komponenten hiervon vor Wandungsbereichen eines Werkzeugteils angeordnet ist, an welchen eine Richtungsänderung der Wandung vorliegt, da hierdurch Messungen auch an Wandstärken des geformten Bauteils mit besonders kritischen Bereichen vorgenommen werden können.

Insbesondere an diesbezüglichen Kurven, Ecken, Kanten, Absätzen oder dergleichen kommt es aufgrund von Materialoptimierungen oder ähnlichem bezüglich des Formteils, wie es eben ein Kühlschrankinnenteil darstellt, oftmals zu kritisch dünnen Materialbereichen an einer Wandung dieses geformten Formteils. Prinzipiell ist an derartigen Wandungsbereichen deshalb eine Messung der vorhandenen Wandungsstärke des geformten Formteils besonders erstrebenswert.

Deshalb findet eine Messung der Wandstärke bevorzugt an kritischen Wandbereichen des thermogeformten Formteils statt. Solche kritischen Wandbereiche liegen beispielsweise an bzw. in der Nähe von Kurven, Ecken oder dergleichen des Formteils vor, welche weitestgehend Deckungsgleich mit entsprechenden Kurven, Ecken, Kanten, Absätzen oder dergleichen des Werkzeugteils, insbesondere des unteren Werkzeugteils, des Thermoformwerkzeugs sind.

Insofern sieht eine bevorzugte Ausführungsvariante vor, dass die Messeinrichtung oder zumindest einzelne Komponenten hiervon an einem Arbeitsbereich des Thermoformwerkzeugs angeordnet ist, in welchem das untere Werkzeugteil und das Formteil deckungsgleich anordenbar sind, wodurch der Aufwand von Dickenmessungen im Allgemeinen erheblich reduziert werden kann. Zumindest sind das untere Werkzeugteil und das Formteil temporär in diesem Arbeitsbereich deckungsgleich positionierbar.

Eine konstruktiv sehr einfach bauende Ausführungsvariante sieht vor, dass die Messeinrichtung oder zumindest einzelne Komponenten hiervon sowohl bei geschlossenem als auch bei geöffnetem Thermoformwerkzeug vor dem unteren Werkzeugteil angeordnet ist.

Beispielsweise werden Messsensorteile der Messeinrichtung bei der Einrichtung des Thermoformwerkzeugs einmalig platziert und ausgerichtet, so dass sie im Wesentlichen stets ortsfest vor dem Arbeitsbereich der Wandstärkenmessung montiert sind.

Somit kann bei geeigneter Ausgestaltung der Erfindung die Messeinrichtung dauerhaft an einem Messbereich platziert sein.

Ein solcher Messbereich zeichnet sich unter anderem dadurch aus, dass dieser Messbereich in bzw. an, insbesondere neben, einem Arbeitsbereich einer Thermoformvorrichtung (Thermoformwerkzeug, Thermoformstation oder ähnlichem) liegt, in welchem wenigstens eine Werkzeugteilwandung und eine Formteilwandung deckungsgleich nebeneinander anordenbar sind.

Alternativ kann die Messeinrichtung oder zumindest einzelne Komponenten hiervon auch verlagerbar an dem Thermoformwerkzeug angeordnet sein, so dass die Messeinrichtung etwa zum Schließen des Thermoformwerkzeugs, also beim eigentlichen Thermoformprozess, aus einer Mess- bzw. Arbeitsposition heraus in eine Warteposition hinein verbracht werden kann.

Gedacht sei hierbei daran, dass die Messeinrichtung oder zumindest einzelne Komponenten hiervon an dem Thermoformwerkzeug verschieblich, schwenkbar, klappbar oder in ähnlicher Weise gelagert sein kann.

Insofern ist es vorteilhaft, wenn die Messeinrichtung oder zumindest einzelne Komponenten hiervon gegenüber einer Werkzeugteilwandung und/oder gegenüber einer Formteilwandung verlagerbar angeordnet ist.

Beispielsweise können hierdurch einzelne Messsensorteile auch an verschiedenen Messstellen eingesetzt werden. Hierzu sind entsprechende Komponenten der Messeinrichtung etwa entlang einer Kurvenbahn oder dergleichen beweglich.

Von Vorteil kann hierbei auch eine zu einer Ebene einer Werkzeugteilwandung und/oder zu einer Formteilwandung planparallele Verlagerung der Messeinrichtung oder zumindest einzelner Komponenten hiervon sein, um ein möglichst kompaktes Anfahren von einzelnen Messbereichen in einer einzigen Ebene zu ermöglichen.

Des Weiteren ist es von Vorteil, wenn die Messeinrichtung oder zumindest Komponenten hiervon bis in einen Messbereich zwischen den beiden Werkzeugteilen hinein anordenbar ist, so dass bevorzugt alle relevanten Wandungsflächen des unteren Werkzeugteils und des darauf aufgeformten Formteils durch die Messeinrichtung erreichbar sind.

Hierbei spielt es dann keine Rolle, ob es sich um vertikal oder horizontal ausgerichtete Flächen eines Werkzeugteils oder eines darüber geformten Formteils handelt.

Ferner kann durch eine zumindest temporäre Anordenbarkeit der Messeinrichtung oder zumindest einzelner Komponenten hiervon die Lage insbesondere einer Werkzeugteilwandung auch mechanisch ertastet werden, so dass eine mechanische Wandstärkenmessung sogleich an bzw. in dem Thermoformwerkzeug vorgenommen werden kann.

Insofern ist es vorteilhaft, wenn die Messeinrichtung an dem Thermoformwerkzeug hineinfahrbar zwischen den Werkzeugteilen des Thermoformwerkzeugs angeordnet ist.

Darüber hinaus ist es vorteilhaft, wenn die Messeinrichtung oder zumindest einzelne Komponenten hiervon einen Linearantrieb aufweist. Mittels eines solchen Linearantriebs kann ein Messsensorteil nochmals zielgerichteter in orthogonaler Richtung zu einer Werkzeugteilwandung und/oder zu einer Formteilwandung verfahren werden. Insbesondere bei einem mechanisch arbeitenden Messsensorteil ist ein solcher Linearantrieb bevorzugt eingesetzt, um beispielsweise ein Tasterelement bis an die Werkzeugteilwandung und/oder an die Formteilwandung heranzufahren.

Um eine besonders zuverlässige und exakte Messung der Wandstärke durchführen zu können, ist außerdem noch eine Kalibriereinrichtung zum Kalibrieren der Messeinrichtung, insbesondere von Messsensorteilen, zweckmäßig.

Eine solche Kalibriereinrichtung kann durch unterschiedlichste Konstruktionen realisiert sein, insbesondere auch computerunterstützt.

Eine besonders einfach bauende Ausführungsvariante sieht vor, dass die Messeinrichtung die Kalibriereinrichtung umfasst, wodurch bevorzugt eine selbstkalibrierende Messeinrichtung an dem Thermoformwerkzeug geschaffen werden kann.

Die Aufgabe der Erfindung wird auch von einer Thermoformstation zum Herstellen eines thermogeformten Formteils aus einer Folie mit einem Thermoformwerkzeug zum Thermoformen der Folie und mit einer Zuführstrecke zum Zuführen der Folie zu dem Thermoformwerkzeug gelöst, wobei die Thermoformstation sich durch ein Thermoformwerkzeug nach einem der hier beschriebenen Merkmale auszeichnet.

Ist die Thermoformstation mit dem hier vorliegenden Thermoformwerkzeug ausgerüstet, kann mit einer derart ausgestatteten Thermoformstation sogleich eine vorteilhafte Wandstärkenmessung an einem soeben geformten Formteil vorgenommen werden, also noch bevor dieses Formteil die Thermoformstation verlässt.

Das bedeutet, dass eine bisher erforderliche weitere Prüfstation zum Prüfen der erzeugten Formteile überflüssig wird bzw. zumindest vereinfacht werden kann, da Funktionen von Qualitätsprüfungen vorteilhafterweise bereits in die vorliegende Thermoformstation integriert sind.

Hierdurch kann der gesamte Herstellungsprozess von Formteilen wesentlich effektiver betrieben werden.

Die Aufgabe der Erfindung wird auch noch von einer alternativen Thermoformstation zum Herstellen eines thermogeformten Formteils aus einer Folie mit einem Thermoformwerkzeug zum Thermoformen der Folie und mit einer Zuführstrecke zum Zuführen des Thermoformwerkzeugs gelöst, wobei die Thermoformstation sich durch eine Messeinrichtung zum Messen wenigstens einer Wandstärke an der thermogeformten Folie nach einem der hier beschriebenen Merkmalen auszeichnet.

Vorteilhafterweise können durch eine derart modifizierte Thermoformstation obendrein herkömmliche Thermoformwerkzeuge im Sinne der vorliegenden Erfindung genutzt werden, so dass auch hierdurch ein Herstellungsprozess von Formteilen wesentlich effektiver betrieben werden kann.

Nicht nur in diesem Zusammenhang ist es vorteilhaft, wenn die Thermoformstation eine Positioniereinrichtung aufweist, an welchem die Messeinrichtung oder zumindest einzelne Komponenten hiervon angeordnet ist, wobei die Positioniereinrichtung von dem Thermoformwerkzeug verschieden ist.

Das bedeutet, dann die für eine Dickenmessung der Wandstärke an der thermogeformten Folie erforderliche Messeinrichtung auch problemlos unabhängig von einem Thermoformwerkzeug an der Thermoformstation angeordnet werden kann.

Mit anderen Worten bedeutet dies auch, dass die Messeinrichtung außerhalb des Thermoformwerkzeugs angeordnet sein kann.

Die Positioniereinrichtung kann hierbei als einfaches Gestellteil bereitgestellt sein, welches zum Tragen der Messeinrichtung geeignet ist.

Bei einer weiterentwickelten Positioniereinrichtung können zusätzlich Mechaniken zum Verlagern oder Verfahren der Messeinrichtung oder zumindest einzelner Komponenten hiervon vorhanden sein, wodurch die Messeinrichtung zumindest temporär an das Thermoformwerkzeug bzw. innerhalb des Thermoformwerkzeugs anordenbar ist.

Des Weiteren wird die Aufgabe der Erfindung von einer Anlage zum Herstellen eines thermogeformten Formteils aus einer Folie mit wenigstens einer Fertigungslinie gelöst, wobei diese Anlage ein Thermoformwerkzeug oder eine Thermoformstation nach einem der hier beschriebenen Merkmale aufweist.

Mittels einer derart ausgestatteten Anlage können thermogeformte Formteile wesentlich effektiver als bisher produziert werden, da das Thermoformen der Folie und zumindest ein erstes Prüfen in Gestalt einer Dickenmessung der Wandstärke des thermogeformten Formteils in einer einzigen bzw. derselben Aufspannung für die Folie bzw. das Formteil vorgenommen werden kann.

An dieser Stelle sei explizit noch darauf hingewiesen, dass dieser signifikante Vorteil auch auf das hier beschriebene Thermoformwerkzeug bzw. der hier beschriebenen Thermoformstation zutrifft.

Die vorliegende Anlage ist vorzugsweise mit einer Folienvorhaltestation ausgestattet, wie dies beispielsweise eine Abwickelstation realisieren kann.

Ferner ist es zweckmäßig, wenn eine Heizstation vorgesehen ist, welche an der Fertigungslinie vor der Thermoformstation platziert ist.

Es versteht sich, dass die Anlage auch noch weitere Arbeitsstationen umfassen kann.

Die Aufgabe der Erfindung wird ebenso von einem Verfahren zum Herstellen eines thermogeformten Formteils, insbesondere eines thermogeformten Formteils für einen Kühlschrank, aus einer Folie aus einem thermoplastischen Material gelöst, bei welchem die Folie mit einer Halteeinrichtung an einem Thermoformwerkzeug gehalten wird, während die Folie mittels des Thermoformwerkzeugs zu dem thermogeformten Formteil umgeformt wird, wobei an dem Thermoformwerkzeug eine Dickenmessung wenigstens einer Wandstärke des thermogeformten Formteils durchgeführt wird.

Durch das Durchführen der Dickenmessung der Wandstärke der Folie, genauer gesagt des bereits thermogeformten Formteils, während sich das Formteil noch an bzw. in dem Thermoformwerkzeug gehaltert befindet, kann das Verfahren zum Herstellen eines Formteils aus einem thermoplastischen Material signifikant vereinfacht werden.

Insbesondere können hierbei Dickenmessungen in derselben Folienaufspannung erfolgen, in welcher die Folie bei dem eigentlichen Thermoformprozess mittels der Halteeinrichtung bereits gehalten wird.

Hierdurch arbeitet das vorliegende Thermoformverfahren nicht nur sehr effektiv, da auf eine spätere erneute Aufspannung des Thermoformteils verzichtet werden kann, sondern wegen der einzigen Aufspannung darüber hinaus auch äußerst präzise.

Insofern sieht eine bevorzugte Verfahrensvariante vor, dass die Dickenmessung an dem thermogeformten Formteil durchgeführt wird, während die Folie mit der Halteeinrichtung an dem Thermoformwerkzeug gehalten wird, insbesondere in der ursprünglichen Folienaufspannung der Folie an dem Thermoformwerkzeug.

Somit sieht eine besonders vorteilhafte Verfahrensvariante vor, dass die Thermoumformung der Folie zu dem Formteil und anschließend wenigstens eine Dickenmessung einer Wandstärke an dem Formteil in ein und derselben Folienaufspannung erfolgt.

Vorliegend ist es ferner sehr vorteilhaft, wenn die Dickenmessung nach jedem Thermoform-Prozess durchgeführt wird, jedoch bevor das thermogeformte Formteil aus dem Thermoformwerkzeug ausgestoßen wird. Hierdurch kann gewährleistet werden, dass bei jedem erzeugten Formteil eine Dickenmessung der Wandstärke vorgenommen wird, bevor dieses Formteil das Thermoformwerkzeug bzw. die Thermoformstation verlässt.

Wird die Dickenmessung nach einem Kühlen des thermogeformten Formteils durchgeführt, kann sichergestellt werden, dass bei der Dickenmessung an bzw. in dem Thermoformwerkzeug auch Schrumpfungseffekte der Folie nach dem Abkühlen berücksichtigt werden können.

Wie eingangs bereits erwähnt, kann eine Dickenmessung mithilfe unterschiedlicher Messmethoden durchgeführten werden. Beispielsweise mittels berührungsloser bzw. kontaktloser, oder kontaktbehafteter Messmethoden.

Eine besonders robuste und damit auch zuverlässige Messmethode sieht zur Weiterentwicklung des vorliegenden Verfahrens vor, dass zum Durchführen der Dickenmessung ein Messsensorteil, insbesondere ein Tasterelement, einer Messeinrichtung in einem ersten Schritt bis an eine Werkzeugteilwandungsoberfläche kontaktbehaftet herangefahren wird (Kalibrierung), in einem zweiten Schritt wieder zurückgezogen wird, und anschließend nach dem eigentlichen Thermoform-Prozess der Folie zu dem Formteil in einem dritten Schritt bis an eine zu der Werkzeugteilwandungsoberfläche deckungsgleich angeordnete Formteilwandungsoberfläche kontaktbehaftet herangefahren wird (Vergleichsmessung).

Hierbei verkörpert die Werkzeugteilwandungsoberfläche eine Referenzfläche der Messeinrichtung. Insofern kann das entsprechende Werkzeugteil auch als Komponente der Messeinrichtung angesehen werden.

Bevorzugt erfolgt die Verlagerung des Messsensorteils bzw. des Tasterelements mittels eines Linearmotors, wie vorstehend bereits erläutert ist.

Insofern wird vorliegend die Messeinrichtung in Abhängigkeit von einem Thermoformwerkzeug, insbesondere in Abhängigkeit von einem Werkzeugteil des Thermoformwerkzeugs, genauer gesagt von einer Werkzeugteiloberfläche, kalibriert, um anschließend in Abhängigkeit von dieser Kalibrierung die Dickenmessung an dem Formteil durchzuführen.

Das vorliegende Verfahren kann vorteilhaft sowohl in einer einzelnen solitär betriebenen Thermoformstation zum Herstellen eines thermogeformten Formteils als auch alternativ an einer Anlage zum Herstellen eines thermogeformten Formteils mit wenigstens einer Fertigungslinie umfassend eine Thermoformstation durchgeführt werden.

An dieser Stelle sei noch beansprucht, dass das beschriebene Verfahren auch noch durch weitere hier beschriebene technische Merkmale ergänzt werden kann, um das Verfahren vorteilhaft weiterzuentwickeln.

Es versteht sich, dass Merkmale der vorstehend bzw. in den Ansprüchen beschriebenen Lösungen gegebenenfalls auch kombiniert werden können, um die vorliegend erzielbaren Vorteile und Effekte entsprechend kumuliert umsetzen zu können.

Weitere Merkmale, Effekte und Vorteile vorliegender Erfindung werden anhand anliegender Zeichnung und nachfolgender Beschreibung erläutert, in welchen beispielhaft ein erstes Ausführungsbeispiel der Erfindung dargestellt und beschrieben ist.

In der Zeichnung zeigen:
- Figur 1: schematisch eine beispielhafte Modellansicht einer Thermoformstation zum Thermoformen einer Folie aus einem thermoplastischen Material zu einem Formteil mit einer Messeinrichtung zum Messen wenigstens einer Wandstärke an der thermogeformten Folie;
- Figur 2: schematisch eine perspektivische Ansicht eines unteren Werkzeugteils der Thermoformstation aus der Figur 1;
- Figur 3: schematisch eine Detailansicht eines mechanisch arbeitenden und sich in einer Grundbzw. Warteposition befindlichen Messsensorteils der Messeinrichtung der Thermoformstation aus den Figuren 1 und 2;
- Figur 4: schematisch eine weitere Detailansicht des in der Figur 3 detaillierter gezeigten Messsensorteils in einer Kalibrierposition; und
- Figur 5: schematisch einen Querschnitt des thermogeformten Formteils in Gestalt einer Kühlschrankinnenteilschale in Verbindung mit dem unteren Werkzeugteil.

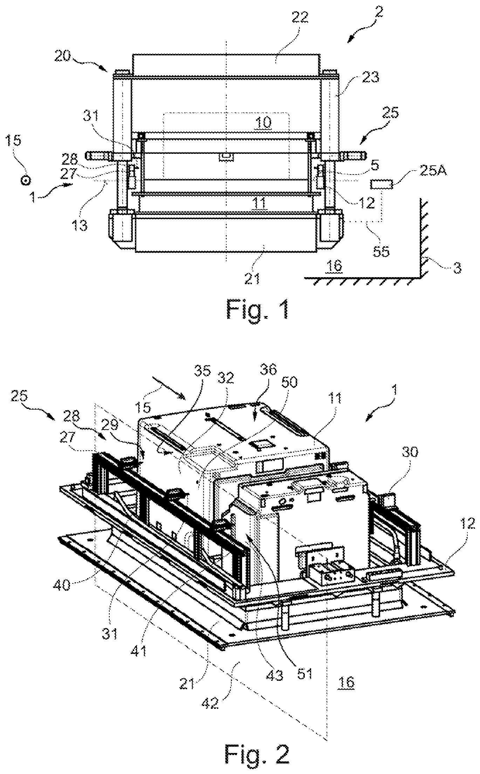

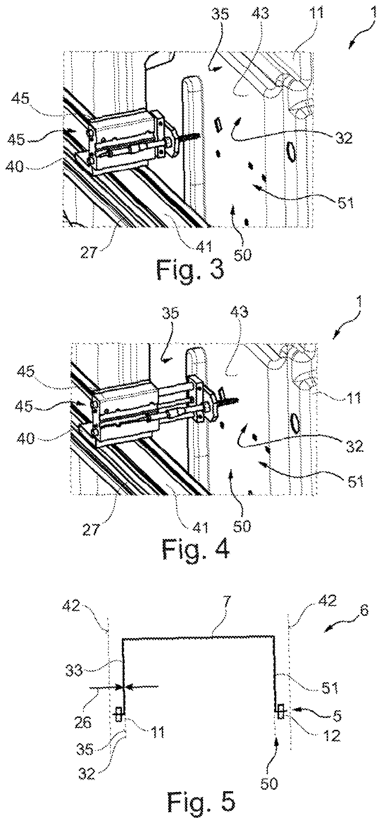

Die Figuren 1 bis 4 zeigen ein mögliches Ausführungsbeispiel eines Thermoformwerkzeugs 1 in einer Thermoformstation 2, welche gemäß dem gezeigten Ausführungsbeispiel in einer Anlage 3 zum Herstellen eines aus einer Folie 5 thermogeformten Formteils 6 (siehe Figur 5) integriert ist, wobei es sich bei dem Formteil 6 hier um eine Kühlschrankinnenteilschale 7 handelt. Dementsprechend wird die Folie 5 in diesem Ausführungsbeispiel als Platte (nicht beziffert) mit einer ausreichenden Materialdicke zur Verfügung gestellt.

Das Thermoformwerkzeug 1 weist im Wesentlichen ein oberes Werkzeugteil 10, ein unteres Werkzeugteil 11 sowie eine Halteeinrichtung 12 zum Halten der Folie 5 zwischen den beiden Werkzeugteilen 10 und 11 auf.

Das obere Werkzeugteil 10 umfasst eine Saug-Druck-Glockenteil (hier nicht nochmals beziffert) des Thermoformwerkzeugs 1, während das untere Werkzeugteil 11 ein Patrizenteil (nicht nochmals beziffert) umfasst, auf welches die Folie 5 während des Thermoformens aufgeformt wird, um hierbei der zweidimensionalen Folie 5 die gewünschte Gestalt als dreidimensionales Formteil 6 zu verleihen.

Die hier zumindest teilweise dargestellte Halteeinrichtung 12 ist Bestandteil eines nicht näher gezeigten Spannrahmens (hier nicht explizit beziffert) des Thermoformwerkzeugs 1, mittels welchem die umzuformende Folie 5 in dem Thermoformwerkzeug 1 und damit auch in der Thermoformstation 2 in einer horizontalen Halte- bzw. Spannebene 13 aufgespannt ist.

Dem Thermoformwerkzeug 1 wird diese Folie 5 entlang einer Zuführstrecke 15 der Thermoformstation 2 zugeführt, wobei die Zuführstrecke 15 bei dem hier dargestellten Ausführungsbeispiel in einer Fertigungslinie 16 der Anlage 3 liegt.

Gemäß der Figur 1 ist die Thermoformstation 2 mit einem geschlossenen Thermoformwerkzeug 1 dargestellt, wobei zwischen den beiden Werkzeugteilen 10 und 11 die horizontale Halte- bzw. Spannebene 13 an der Zuführstrecke 15 liegt.

Die Thermoformstation 2 weist ein Gestell 20 mit einem Unterteil 21 zur Aufnahme des unteren Werkzeugteils 11 und mit einem Oberteil 22 zur Aufnahme des oberen Werkzeugteils 10 auf. Das Gestell 20 umfasst des Weiteren noch Stempelführungsteile 23 (nur exemplarisch beziffert), mittels welchen das Oberteil 22 und das Unterteil 21, insbesondere während des Thermoformens bzw. Druckluftformens, an dem Gestell 20 verriegelbar sind.

Das Thermoformwerkzeug 1 zeichnet sich ferner durch eine Messeinrichtung 25 zum Messen von wenigstens einer Wandstärke 26 (vgl. Figur 5) der thermogeformten Folie 5, genauer gesagt des thermogeformten Formteils 6 bzw. der thermogeformten Kühlschrankinnenteilschale 7, aus.

Diese Messeinrichtung 25 umfasst in diesem Ausführungsbeispiel einerseits als Tragegestell der Messeinrichtung 25 ein Brückenteil 27, welches von der Halteeinrichtung 12 bzw. dem entsprechenden Spannrahmen getragen wird.

Wie insbesondere gemäß der Darstellung nach der Figur 2 gut ersichtlich ist, weist die Messeinrichtung 25 andererseits eine Vielzahl an Messsensorteilen 28 (hier nur exemplarisch beziffert) auf, so dass bevorzugt gleichzeitig mehrere Dickenmessungen von Wandstärken 26 an verschiedenen Messstellen 29 bzw. Messbereichen an dem Formteil 6 vorgenommen werden können.

Insofern ist die Messeinrichtung 25 oder zumindest einzelne Komponenten (Brückenteil 27, Vielzahl an Messsensorteilen 28 oder dergleichen) hiervon an der Halteeinrichtung 12 bzw. an dem Spannrahmen angeordnet.

Alternativ könnten - bei entsprechender Ausgestaltung der Erfindung - die einzelnen Messsensorteile 28 der Messeinrichtung 25 direkt an der Halteeinrichtung 12 bzw. dem Spannrahmen befestigt sein (hier nicht gezeigt), also ohne Zwischenschaltung eines Brückenteils 27 oder dergleichen.

Bei den hier eingesetzten Messsensorteilen 28 handelt es sich um mechanische Messsensorteile 30, welche zwar ortsfest an dem Brückenteil 27 bzw. an der Halteeinrichtung 12 angeordnet sind, jedoch jeweils mittels eines Tasterelements 31 zum einen für eine Kalibrierung der Messeinrichtung 25 mit Werkzeugteilwandungsbereichen 32 (nur exemplarisch beziffert) und zum anderen für die eigentliche Dickenmessung später noch mit Formteilwandungsbereichen 33 (vgl. Figur 5) in Wirkkontakt gebracht werden können.

Somit weist das Thermoformwerkzeug 1 bzw. die Thermoformstation 2 sogleich eine Kalibriereinrichtung (nicht nochmals beziffert) auf, nämlich in Gestalt einer selbstkalibrierenden Messeinrichtung 25.

Hierbei dienen die Werkzeugteilwandungsbereiche 32 als Referenzebenen, welche bevorzugt als vertikale Referenzflächen 35 (nur exemplarisch beziffert) und/oder auch als horizontale Referenzflächen 36 (nur exemplarisch beziffert) ausgebildet sein können.

Insofern handelt es sich insbesondere bei den Werkzeugteilwandungsbereichen 32 sowie den Referenzflächen 35 bzw. 36 als der Messeinrichtung 25 zugehörige Komponenten.

Die einzelnen Messsensorteile 28 sind hierbei noch mittels Halteschlitten 40 verschieblich entlang eine Schlittenbahn 41 an dem Brückenteil 27 gelagert, so dass die einzelnen Messsensorteile 28 insbesondere auch in Abhängigkeit von dem unteren Werkzeugteil 11 bzw. der Gestalt des thermozuformenden Formteils 6 verschieblich gelagert sind.

In dem hier gezeigten Ausführungsbeispiel sind die einzelnen Messsensorteile 28 somit in oder entlang einer Vertikalebene 42 verschieblich gelagert, welche im Wesentlichen planparallel zu der vertikalen Referenzfläche 35 des unteren Werkzeugteils 11 und des Formteils 6 verläuft.

Insofern können die einzelnen Messsensorteile 28 auch präzise an Wandungsbereiche 32 des unteren Werkzeugteils 11 heran platziert werden, an welchen oder in deren Nähe die Wandung 43 des unteren Werkzeugteils 11 eine Richtungsänderung macht, beispielsweise in Gestalt einer Kurve, Kante, Erhebung, Senke oder dergleichen.

An derartigen Wandungsbereichen 32 treten an dem Formteil 6 oftmals kritische Wandstärken 26 auf, welche messtechnisch zu prüfen sind, um frühzeitig Schlechtteile von Gutteilen aussortieren zu können.

Darüber hinaus weist jedes mechanische Messsensorteil 30 ein Gehäuse 45 auf, welche einen Linearmotor 46 beherbergt. Der Linearmotor 46 besitzt einen Schieber 47, mittels welchem das Tasterelement 31 im Wesentlichen orthogonal zu dem jeweils zugeordneten Werkzeugteilwandungsbereich 32 bzw. Formteilwandungsbereich 33 bewegt werden kann.

In der Figur 5 ist beispielhaft dargestellt, wie das Formteil 6 an dem unteren Werkzeugteil 11 ausgeformt ist, wobei die Folie 5 bzw. das Formteil 6 immer noch von der Halteeinrichtung 12 gehalten ist, während mittels der Messeinrichtung 25 die Dickenmessung vorgenommen bzw. abgeschlossen wird.

Hierzu kann die Messeinrichtung 25 oder zumindest einzelne Komponenten 27, 28, 30, 31, 40, 41, 45, 46, 47 hiervon zumindest temporär an einem Arbeitsbereich 50 des Thermoformwerkzeugs 1 angeordnet werden, in welchem das untere Werkzeugteil 11 und das Formteil deckungsgleich angeordnet werden können.

Genauso können die Messeinrichtung 25 oder zumindest einzelne Komponenten 27, 28, 30, 31, 40, 41, 45, 46, 47 hiervon zumindest temporär bis in einen Messbereich 51 zwischen den beiden Werkzeugteilen 10 und 11 angeordnet werden, um eine Dickenmessung im Sinne der Erfindung durchzuführen.

An dieser Stelle sei noch erwähnt, dass bei einer nochmals anders konstruierten Ausführungsvariante einzelnen Messsensorteile (hier nicht gezeigt) einer Messeinrichtung 25A auch unabhängig von dem Thermoformwerkzeug 1 an einer sonstigen Positioniereinrichtung 55 (gestrichelt dargestellt, vgl. Figur 1) kumulativ oder alternativ angeordnet sein könnten, während ja bei dem hier gezeigten Ausführungsbeispiel die Messeinrichtung 25 dem Thermoformwerkzeug 1 direkt zugeordnet ist.

Verfahrenstechnisch können Dickenmessungen von Wandstärken 26 des thermogeformten Formteils 6, insbesondere mittels des hier vorgestellten Thermoformwerkzeugs 1 bzw. der hier vorgestellten Thermoformstation erzeugten Formteils 6, beispielsweise mit einem Verfahren zum Herstellen des thermogeformten Formteils 6, insbesondere der thermogeformten Kühlschrankinnenteilschale 7 für einen Kühlschrank, aus der thermoplastischen Folie 5 durchgeführt werden, bei welchem die Folie 5 mit der Halteeinrichtung 12 an dem Thermoformwerkzeug 1 gehalten bzw. aufgespannt wird, während die Folie 5 mittels des Thermoformwerkzeugs 1 zu dem thermogeformten Formteil 6 bzw. der Kühlschrankinnenteilschale 7 umgeformt wird, wobei eine Dickenmessung wenigstens einer Wandstärke 26 des thermogeformten Formteils 6 bzw. 7 direkt an bzw. in dem Thermoformwerkzeug 1 durchgeführt wird.

Mit anderen Worten bedeutet dies, dass die Dickenmessung erfolgt, während die Folie 5 bzw. das Formteil 6 immer noch von der Halteeinrichtung 12 gehalten wird.

An dieser Stelle sei explizit darauf hingewiesen, dass Merkmale der vorstehend bzw. in den Ansprüchen und/oder Figuren beschriebenen Lösungen gegebenenfalls auch kombiniert werden können, um die erläuterten Merkmale, Effekte und Vorteile entsprechend kumuliert umsetzen bzw. erzielen zu können.

Es versteht sich, dass es sich bei dem vorstehend erläuterten Ausführungsbeispiel lediglich um eine erste Ausgestaltung einer erfindungsgemäßen Vorrichtung zum Messen von Wandstärken an soeben thermogeformten Folien, Platten bzw. Formteilen aus thermoplastischem Material handelt. Insofern beschränkt sich die Ausgestaltung der Erfindung nicht auf dieses Ausführungsbeispiel.

### Liste der verwendeten Bezugszeichen

- 1: Thermoformwerkzeug
- 2: Thermoformstation
- 3: Anlage
- 5: Folie
- 6: Formteil
- 7: Kühlschrankinnenteilschale
- 10: oberes Werkzeugteil
- 11: unteres Werkzeugteil
- 12: Halteeinrichtung
- 13: Halte- bzw. Spannebene
- 15: Zuführstrecke
- 16: Fertigungslinie
- 20: Gestell
- 21: Unterteil
- 22: Oberteil
- 23: Stempelführungsteile
- 25: Messeinrichtung
- 25A: weitere Messeinrichtung
- 26: Wandstärken
- 27: Brückenteil
- 28: Messsensorteilen
- 29: Messstellen
- 30: mechanische Messsensorteile
- 31: Tasterelemente
- 32: Werkzeugteilwandungsbereiche
- 33: Formteilwandungsbereichen
- 35: vertikale Referenzflächen
- 36: horizontale Referenzflächen
- 40: Halteschlitten
- 41: Schlittenbahn
- 42: Vertikalebene
- 43: Wandung
- 45: Gehäuse
- 46: Linearmotor
- 47: Schieber
- 50: Arbeitsbereich
- 51: Messbereich
- 55: Positioniereinrichtung

## Patentansprüche

1. Thermoformwerkzeug (1) zum Thermoformen einer Folie (5) aus einem thermoplastischen Material zu einem Formteil (6), insbesondere zu einem Formteil (7) eines Kühlschranks, mit einem oberen Werkzeugteil (10), mit einem unteren Werkzeugteil (11) und mit einer Halteeinrichtung (12) zum Halten der Folie (5) zwischen den beiden Werkzeugteilen (10, 11), wobei eine Messeinrichtung (25) zum Messen wenigstens einer Wandstärke (26) an der thermogeformten Folie (5) vorgesehen ist, **dadurch gekennzeichnet, dass** die Messeinrichtung (25) oder zumindest einzelne Komponenten (27, 28, 30, 31, 40, 41, 45, 46, 47) hiervon an der Halteeinrichtung (12) angeordnet sind und wobei
- die Halteeinrichtung (12) realisiert ist als Spannrahmenteil bzw. Spannrahmen und/oder
- zum Haltern der Folie eine Vielzahl an Einzelgreifern vorgesehen sind.

2. Thermoformwerkzeug (1) nach Anspruch 1, ***dadurch gekennzeichnet, dass*** die Messeinrichtung (25) Messsensorteile (28), insbesondere mechanische Messsensorteile (30), optische Messsensorteile, akustische Messsensorteile und/oder dergleichen, umfasst.

3. Thermoformwerkzeug (1) nach einem der Ansprüche 1 oder 2, ***dadurch gekennzeichnet, dass*** die Messeinrichtung (25) oder zumindest einzelne Komponenten (27, 28, 30, 31, 40, 41, 45, 46, 47) hiervon außen vor dem unteren Werkzeugteil (11), insbesondere seitlich neben dem unteren Werkzeugteil (11), angeordnet ist, insbesondere vor Wandungsbereichen (32, 35, 36) eines Werkzeugteils (10, 11), an welchen eine Richtungsänderung der Wandung (43) vorliegt.

4. Thermoformwerkzeug (1) nach einem der Ansprüche 1 bis 3, ***dadurch gekennzeichnet, dass*** die Messeinrichtung (25) oder zumindest einzelne Komponenten (27, 28, 30, 31, 40, 41, 45, 46, 47) hiervon an einem Arbeitsbereich (50) des Thermoformwerkzeugs (1) angeordnet ist, in welchem das untere Werkzeugteil (11) und das Formteil (6, 7) deckungsgleich anordenbar sind.

5. Thermoformwerkzeug (1) nach einem der Ansprüche 1 bis 4, ***dadurch gekennzeichnet, dass*** die Messeinrichtung (25) oder zumindest einzelne Komponenten (27, 28, 30, 31, 40, 41, 45, 46, 47) hiervon sowohl bei geschlossenem als auch bei geöffnetem Thermoformwerkzeug (1) vor dem unteren Werkzeugteil (11) angeordnet ist.

6. Thermoformwerkzeug (1) nach einem der Ansprüche 1 bis 5, ***dadurch gekennzeichnet, dass*** die Messeinrichtung (25) oder zumindest einzelne Komponenten (27, 28, 30, 31, 40, 41, 45, 46, 47) hiervon bis in einen Messbereich (51) zwischen den beiden Werkzeugteilen (10, 11) anordenbar ist.

7. Thermoformwerkzeug (1) nach einem der Ansprüche 1 bis 6, ***dadurch gekennzeichnet, dass*** die Messeinrichtung (25) oder zumindest einzelne Komponenten (27, 28, 30, 31, 40, 41, 45, 47) hiervon einen Linearantrieb (46) aufweist.

8. Thermoformstation (2) zum Herstellen eines thermogeformten Formteils (6, 7) aus einer Folie mit einem Thermoformwerkzeug (1) zum Thermoformen der Folie (5) und mit einer Zuführstrecke (15) zum Zuführen der Folie (5) zu dem Thermoformwerkzeug (1), ***gekennzeichnet durch*** ein Thermoformwerkzeug (1) nach einem der vorhergehenden Ansprüche 1 bis 7.

9. Anlage (3) zum Herstellen eines thermogeformten Formteils aus einer Folie (5) mit wenigstens einer Fertigungslinie (16), ***dadurch gekennzeichnet, dass*** die Anlage (3) ein Thermoformwerkzeug (1) nach einem der Ansprüche 1 bis 8 oder eine Thermoformstation (2) nach Anspruch 9 oder 10 aufweist.

10. Verfahren zum Herstellen eines thermogeformten Formteils (6), insbesondere eines thermogeformten Formteils (7) für einen Kühlschrank, aus einer Folie (5) aus einem thermoplastischen Material, bei welchem die Folie (5) mit einer Halteeinrichtung (12) an einem Thermoformwerkzeug (1) gehalten wird, während die Folie (5) mittels des Thermoformwerkzeugs (1) zu dem thermogeformten Formteil (6, 7) umgeformt wird, ***dadurch gekennzeichnet, dass*** das Thermoformwerkzeug (1) nach einem der Ansprüche 1 bis 7 ausgebildet ist und an dem Thermoformwerkzeug (1) eine Dickenmessung wenigstens einer Wandstärke (26) des thermogeformten Formteils (6, 7) durchgeführt wird.

11. Verfahren nach Anspruch 10, ***dadurch gekennzeichnet, dass*** die Dickenmessung an dem thermogeformten Formteil (6, 7) durchgeführt wird, während die Folie (5) mit der Halteeinrichtung (12) an dem Thermoformwerkzeug (1) gehalten wird.

12. Verfahren nach Anspruch 10 oder 11, ***dadurch gekennzeichnet, dass*** die Dickenmessung nach jedem Thermoform-Prozess durchgeführt wird, jedoch bevor das thermogeformte Formteil (6, 7) aus dem Thermoformwerkzeug (1) ausgestoßen wird.

13. Verfahren nach einem der Ansprüche 10 bis 12, ***dadurch gekennzeichnet, dass*** die Dickenmessung nach einem Kühlen des thermogeformten Formteils (6, 7) durchgeführt wird.

## Claims

1. Thermoforming tool (1) for thermoforming a film (5), made of a thermoplastic material, into a moulded part (6), in particular a moulded part (7) of a refrigerator, having an upper tool part (10), having a lower tool part (11), and having a holding device (12) for holding the film (5) between the two tool parts (10, 11), wherein a measuring device (25) for measuring at least one wall thickness (26) is provided on the thermoformed film (5), **characterized in that** the measuring device (25) or at least individual components (27, 28, 30, 31, 40, 41, 45, 46, 47) thereof are arranged on the holding device (12) and wherein
- the holding device (12) is realized as a clamping frame part or clamping frame and/or
- a plurality of individual grippers are provided for holding the film.

2. Thermoforming tool (1) according to Claim 1, ***characterized in that*** the measuring device (25) comprises measuring sensor parts (28), in particular mechanical measuring sensor parts (30), optical measuring sensor parts, acoustic measuring sensor parts and/or the like.

3. Thermoforming tool (1) according to either of Claims 1 or 2, ***characterized in that*** the measuring device (25) or at least individual components (27, 28, 30, 31, 40, 41, 45, 46, 47) thereof is arranged on the outside in front of the lower tool part (11), in particular laterally next to the lower tool part (11), in particular in front of wall regions (32, 35, 36) of a tool part (10, 11) at which there is a change in direction of the wall (43) .

4. Thermoforming tool (1) according to any of Claims 1 to 3, ***characterized in that*** the measuring device (25) or at least individual components (27, 28, 30, 31, 40, 41, 45, 46, 47) thereof is arranged on a working area (50) of the thermoforming tool (1), in which the lower tool part (11) and the moulded part (6, 7) can be arranged congruently.

5. Thermoforming tool (1) according to any of Claims 1 to 4, ***characterized in that*** the measuring device (25) or at least individual components (27, 28, 30, 31, 40, 41, 45, 46, 47) thereof is arranged in front of the lower tool part (11) both when the thermoforming tool (1) is closed and when it is open.

6. Thermoforming tool (1) according to any of Claims 1 to 5, ***characterized in that*** the measuring device (25) or at least individual components (27, 28, 30, 31, 40, 41, 45, 46, 47) thereof can be arranged up to a measuring region (51) between the two tool parts (10, 11).

7. Thermoforming tool (1) according to any of Claims 1 to 6, ***characterized in that*** the measuring device (25) or at least individual components (27, 28, 30, 31, 40, 41, 45, 47) thereof has a linear drive (46).

8. Thermoforming station (2) for producing a thermoformed moulded part (6, 7) from a film, having a thermoforming tool (1) for thermoforming the film (5) and having a feed section (15) for feeding the film (5) to the thermoforming tool (1), ***characterized by*** a thermoforming tool (1) according to any of the preceding Claims 1 to 7.

9. System (3) for producing a thermoformed moulded part from a film (5) having at least one production line (16), ***characterized in that*** the system (3) has a thermoforming tool (1) according to any one of Claims 1 to 8 or a thermoforming station (2) according to Claim 9 or 10.

10. Method for producing a thermoformed moulded part (6), in particular a thermoformed moulded part (7) for a refrigerator, from a film (5) made of a thermoplastic material, in which the film (5) is held on a thermoforming tool (1) by means of a holding device (12), while the film (5) is formed into the thermoformed moulded part (6, 7) by means of the thermoforming tool (1), ***characterized in that*** the thermoforming tool (1) is designed according to any of Claims 1 to 7, and a thickness measurement of at least one wall thickness (26) of the thermoformed moulded part (6, 7) is carried out on the thermoforming tool (1).

11. Method according to Claim 10, ***characterized in that*** said thickness measurement is carried out on said thermoformed moulded part (6, 7) while said film (5) is held on said thermoforming tool (1) with said holding device (12).

12. Method according to Claim 10 or 11, ***characterized in that*** said thickness measurement is carried out after each thermoforming process, but before said thermoformed moulded part (6, 7) is ejected from said thermoforming tool (1).

13. Method according to any of Claims 10 to 12, ***characterized in that*** said thickness measurement is carried out after cooling said thermoformed moulded part (6, 7).

## Revendications

1. Outil de thermoformage (1) destiné au thermoformage d'un film (5) réalisé à partir d'une matière thermoplastique pour former une pièce moulée (6), notamment pour former une pièce moulée (7) d'une armoire de refroidissement, avec une partie d'outil supérieure (10), avec une partie d'outil inférieure (11) et avec un dispositif de maintien (12) permettant de maintenir le film (5) entre les deux parties d'outil (10, 11), dans lequel un dispositif de mesure (25) servant à mesurer au moins une épaisseur de paroi (26) est prévu au niveau du film thermoformé (5), **caractérisé en ce que** le dispositif de mesure (25) ou au moins les composants individuels (27, 28, 30, 31, 40, 41, 45, 46, 47) le composant sont disposés au niveau du dispositif de maintien ; et dans lequel
- le dispositif de maintien (12) est réalisé sous la forme d'une partie de cadre de serrage et/ou du cadre de serrage ; et/ou
- une pluralité d'éléments individuels de préhension sont prévus pour maintenir le film.

2. Outil de thermoformage (1) selon la revendication 1, ***caractérisé en ce que*** le dispositif de mesure (25) comprend des parties de capteur de mesure (28), notamment des parties de capteur de mesure mécaniques (30), des parties de capteur de mesure optiques, parties de capteur de mesure acoustiques et/ou leur équivalent.

3. Outil de thermoformage (1) selon l'une quelconque des revendications 1 ou 2, ***caractérisé en ce que*** le dispositif de mesure (25) ou au moins les composants individuels (27, 28, 30, 31, 40, 41, 45, 46, 47) le composant sont disposés à l'extérieur de la partie d'outil inférieure (11), notamment latéralement à côté de la partie d'outil inférieure (11), notamment devant les zones de paroi (32, 35, 36) d'une partie d'outil (10, 11) au niveau desquelles un changement de direction de la paroi (43) se produit.

4. Outil de thermoformage (1) selon l'une quelconque des revendications 1 à 3, ***caractérisé en ce que*** le dispositif de mesure (25) ou au moins les composants individuels (27, 28, 30, 31, 40, 41, 45, 46, 47) le composant sont disposés au niveau d'une zone de travail (50) de l'outil de thermoformage (1) dans laquelle la partie d'outil inférieure (11) et la pièce moulée (6, 7) peuvent être agencées de façon à coïncider.

5. Outil de thermoformage (1) selon l'une quelconque des revendications 1 à 4, ***caractérisé en ce que*** le dispositif de mesure (25) ou au moins les composants individuels (27, 28, 30, 31, 40, 41, 45, 46, 47) le composant sont disposés devant la partie d'outil inférieure (11) tant en cas d'outil de thermoformage (1) ouvert que fermé.

6. Outil de thermoformage (1) selon l'une quelconque des revendications 1 à 5, ***caractérisé en ce que*** le dispositif de mesure (25) ou au moins les composants individuels (27, 28, 30, 31, 40, 41, 45, 46, 47) le composant peuvent être agencés jusque dans une zone de mesure (51) située entre les deux parties d'outil (10, 11).

7. Outil de thermoformage (1) selon l'une quelconque des revendications 1 à 6, ***caractérisé en ce que*** le dispositif de mesure (25) ou au moins les composants individuels (27, 28, 30, 31, 40, 41, 45, 47) le composant comportent un entraînement en entrée linéaire (46).

8. Station de thermoformage (2) pour la production d'une pièce moulée thermoformée (6, 7) composée d'un film avec un outil de thermoformage (1) destiné au thermoformage du film (5) et avec un tronçon d'amenée (15) servant à amener le film (5) à l'outil de thermoformage (1), ***caractérisée par*** la présence d'un outil de thermoformage (1) selon l'une quelconque des revendications précédentes 1 à 7.

9. Installation (3) pour la production d'une pièce moulée thermoformée composée d'un film (5) avec au moins une chaîne de production (16), ***caractérisée en ce que*** l'installation (3) comporte un outil de thermoformage (1) selon l'une quelconque des revendications 1 à 8 ou une station de thermoformage (2) selon la revendication 9 ou 10.

10. Procédé de production d'une pièce moulée thermoformée (6), notamment d'une pièce moulée thermoformée (7) pour une armoire de refroidissement, composée d'un film (5) réalisé à partir d'une matière thermoplastique dans lequel le film (5) est maintenu au niveau d'un outil de thermoformage (1) à l'aide d'un dispositif de maintien (12), tandis que le film (5) est formé à l'aide de l'outil de thermoformage (1) en une pièce moulée thermoformée (6, 7), ***caractérisé en ce que*** l'outil de thermoformage (1) est réalisé selon l'une quelconque des revendications 1 à 7 et qu'une mesure d'épaisseur d'au moins une épaisseur de paroi (26) de la pièce moulée thermoformée (6, 7) est réalisée contre l'outil de thermoformage (1).

11. Procédé selon la revendication 10, ***caractérisé en ce que*** la mesure d'épaisseur est réalisée au niveau de la pièce moulée thermoformée (6, 7) tandis que le film (5) est maintenu contre l'outil de thermoformage (1) à l'aide du dispositif de maintien (12).

12. Procédé selon la revendication 10 ou 11, ***caractérisé en ce que*** la mesure d'épaisseur est réalisée après chaque processus de thermoformage toutefois avant que la pièce moulée thermoformée (6, 7) soit éjectée hors de l'outil de thermoformage (1).

13. Procédé selon l'une quelconque des revendications 10 à 12, ***caractérisé en ce que*** la mesure d'épaisseur est réalisée après refroidissement de la pièce moulée thermoformée (6, 7).
